# EUROPEAN PATENT APPLICATION

(11) **EP 1 997 687 A2**
(43) Date of publication of application: **03.12.2008**
(21) Application number: 08156949.3
(22) Date of filing: 27.05.2008
(51) Int. Cl.: B60R 16/03

(54) **Device to assist in maneuvering and parking commercial and industrial motor vehicles**

(30) Priority: 31.05.2007 IT UD20070102
(71) Applicant: Cobbe, Sebastiano, 38068 Rovereto (TN) (IT)
(72) Inventor: Cobbe, Sebastiano, 38068 Rovereto (TN) (IT)
(74) Representative: Petraz, Gilberto Luigi

(57) **Abstract**

Device to assist in maneuvering and parking a commercial or industrial motor vehicle, comprising electronic elements, installed in the rear part of the vehicle and able to detect the presence of an obstacle and to transmit a corresponding signal. The electronic elements comprise one or more proximity sensors (12) and at least a transmission unit (15), fed by at least an electric feed cable already present in the vehicle to feed at least a rear light unit of the vehicle.

## Description

### FIELD OF THE INVENTION

The present invention concerns a device to assist in maneuvering and parking commercial and industrial motor vehicles, such as for example trailer trucks, semitrailers, articulated vehicles or suchlike. The device is of the wireless type and is able to detect the presence of generic obstacles near the rear part of the vehicle on which it is mounted, in particular during maneuvers in reverse gear, and to transmit a corresponding signal to the driver's cabin, so that he can take it into account.

### BACKGROUND OF THE INVENTION

Devices to assist in maneuvering and parking, mounted on automobiles, are known. These known devices are provided with one or more proximity sensors disposed in the rear part of the automobile and able to detect the presence of a possible obstacle in their vicinity. The proximity sensors generate a corresponding electric signal which, through a cable, is transmitted to an electronic circuit which generates an acoustic signal, in the interior of the vehicle, which becomes more frequent and intense as the distance of the vehicle from the obstacle diminishes, and/or a message that is displayed on the display of the satellite navigation system on board the automobile itself. Therefore, these known devices require electric cables which develop for the whole length of the vehicle, so as to transfer the signal relating to the obstacle detected to inside the vehicle.

Instead, in commercial and industrial vehicles such as trailer trucks, semitrailers, articulated vehicles or suchlike, simple sound devices are mounted, which are activated when the vehicle is reversing, in order to generate an acoustic signal on the rear part of the vehicle, which serves as a simple warning for those who are in the vicinity of the vehicle; however, it does not provide any assistance to the driver with regard to the detection of obstacles. For this reason, attempts have been made to transfer the devices to assist in parking and maneuvering of the type present on automobiles to commercial and industrial vehicles too. However, the solutions currently in existence provide to locate cables along the whole length of the vehicle, both to feed the device and also to transfer the signal relating to the presence of the obstacle, in addition to those cables already present, which are able to supply electric feed to the signaling and lighting devices located in the rear part of the vehicle.

This known solution, however, is not at all advantageous. The varieties of models of commercial and industrial vehicles present on the market, and their particular structure, entail different and complicated operations to assemble the devices. Consequently, this known solution is not economical, both from the point of view of the materials used for the cabling, given the sizes of said vehicles, and also from the point of view of the installation times. Furthermore, this known solution also has the disadvantage that, if the device or some cable were to be damaged in a zone of the vehicle that is not easily accessible, it requires very long repair and maintenance times, with consequent extremely high costs.

One purpose of the present invention is to achieve a device to assist in maneuvering and parking commercial and industrial vehicles which does not use cables to transfer, from the rear part of the vehicle to inside the driver's cabin, the signal relating to the presence of the obstacle.

Another purpose of the present invention is to achieve a device that is easily adaptable to the majority of commercial and industrial vehicles present on the market, and easily integrated into their existing components.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, a device according to the present invention is able to be used to assist in maneuvering and parking commercial and industrial vehicles, such as for example trailer trucks, semitrailers, articulated vehicles or suchlike.

According to the present invention the device comprises one or more proximity sensors and at least a transmission unit, installed in the rear part of the vehicles, able respectively to detect the presence of an obstacle and to transmit a corresponding signal.

According to a characteristic feature of the present invention, the proximity sensors and the transmission unit are fed by an electric feed cable already present in the vehicles for the electric feed of their rear light units. In particular, the proximity sensors and the transmission unit are advantageously installed inside at least one of said rear light units and are fed by the electric feed cable of the reversing light.

According to another characteristic feature of the present invention, the transmission unit is able to transmit the signal relating to the presence of the obstacle via radio.

The device according to the present invention also comprises a receiver unit able to be disposed, for example, in the driver's cabin of the vehicles, for example on the dashboard, or in one or the other of the rear-view mirrors, to receive via radio the signal transmitted by the transmission unit; and an acoustic and/or signaling device able to be disposed in the driver's cabin of the vehicles so as to signal the presence of the obstacle to the drivers.

These characteristics allow to have a device which, during the assembly step, does not entail the need to make modifications to the pre-existing electric system, which gives quick and economical installation times.

The device according to the present invention therefore provides a standardized solution to equip the majority of commercial and industrial vehicles present on the market with a device to assist in maneuvering, which can therefore be advantageously distributed in easily installable kits.

Furthermore, the installation of the components of the device at easily reachable points, such as the rear light units and the driver's cabin, allows an easier replacement of the components in the event of a malfunction, and thus also entails savings in maintenance times and costs.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a block diagram of the device according to the present invention;
- fig. 2 is a more detailed block diagram of the device in fig. 1;
- fig. 3 is a three-dimensional view of a rear protection bar of a vehicle on which the device in fig. 1 is installed;
- fig. 4 is a three-dimensional view of a light unit on the protection bar in fig. 3; and
- fig. 5 is a three-dimensional and exploded view of the light unit in fig. 4.

### DETAILED DESCRIPTION OF A PREFERENTIAL FORM OF EMBODIMENT

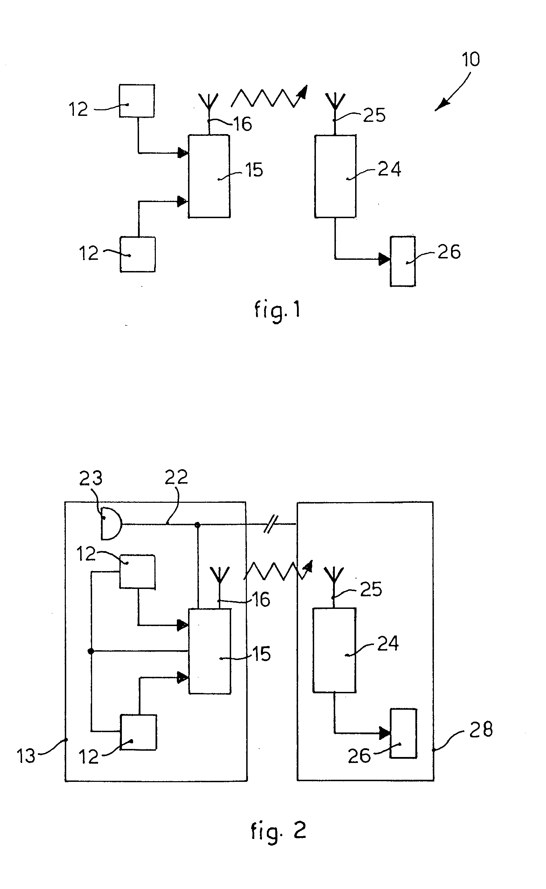

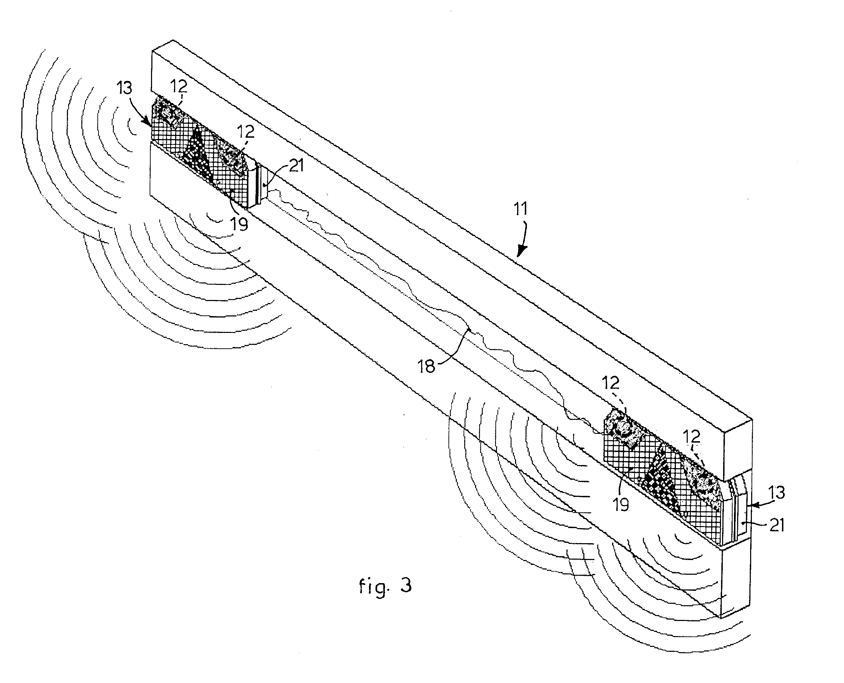

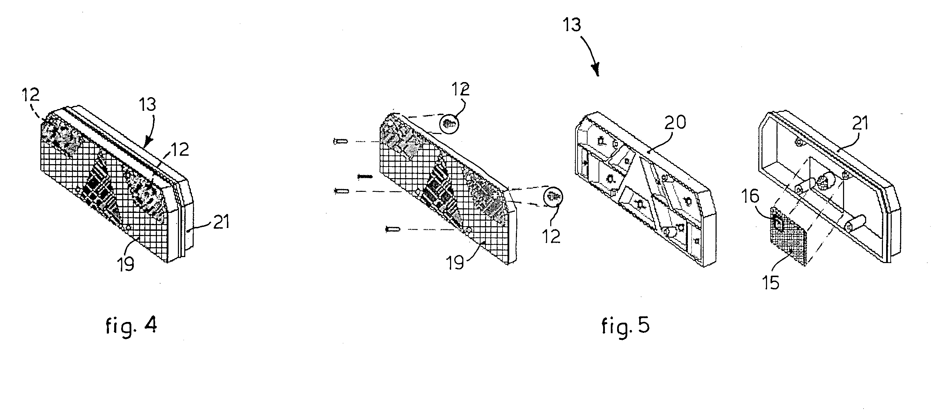

With reference to fig. 1, a device 10 according to the present invention is able to be mounted on any commercial or industrial vehicle of a known type, having two rear light units 13 positioned in this case in a rear protection or anti-rear-end collision bar 11 (fig 3), to assist in maneuvering and parking said vehicle. The device 10 comprises two pairs of proximity sensors 12, of a known type, each mounted in correspondence with a rear light unit 13 (figs. 2 and 4) so as to detect the presence of an obstacle in the vicinity. The proximity sensors 12 are connected to a transmission unit 15, also disposed in one of the two rear light units 13 and provided with a transmission antenna 16 and able to transmit, via radio, the signal relating to the presence of the obstacle. The pair of proximity sensors 12, which are mounted in the light unit where the transmission unit 15 is not located, is connected to the latter by an electric cable 18.

According to a variant, not shown here, the electric cable 18 is not present and each rear light unit 13 has its own substantially autonomous transmission unit 15.

In particular, each pair of proximity sensors 12 is installed in proximity or contact with a grille 19 of the light unit 13 and is also housed inside a light-holder fixture 20 (fig. 5).

The transmission unit 15, with the corresponding transmission antenna 16, on the contrary is disposed inside a cable-holder fixture 21. The transmission unit 15 is connected to an electric feed cable 22 of the reversing lights 23 (fig. 2). The cable 22 is able to provide the electric feed necessary to activate the transmission unit 15 and consequently the proximity sensors 12 connected thereto.

The device 10 also comprises a receiver unit 24, equipped with a receiver antenna 25, able to receive via radio the signal arriving from the transmission antenna 16 of the transmission unit 15. The receiver unit 24 is connected to an acoustic and/or visual signaling device 26 able to signal the presence of the obstacle detected by the proximity sensors 12. The receiver unit 24 and the signaling device 26 are both able to be disposed in the driver's cabin 28 of the commercial or industrial vehicle on which the device 10 is installed.

According to a variant, not shown here, the receiver unit 24 and/or the signaling device 26 are installed on one of the external rear-view mirrors of the vehicle.

The following is one example of the functioning of the device 10 as described heretofore, with reference to the attached drawings. When the driver of the commercial or industrial vehicle on which the device 10 is mounted engages reverse gear, the proximity sensors 12 and the transmission unit 15 are activated. If the proximity sensors 12 detect the presence of an obstacle, they transfer the corresponding signal relating to the obstacle to the transmission unit 15, which by means of the transmission antenna 16 transmits the signal via radio to the receiver antenna 25 and consequently to the receiver unit 24. The signal received by the receiver unit 24 is subsequently sent to the signaling device 26, which signals the presence of the obstacle by means of an acoustic and/or visual signal.

It is clear that modifications and/or additions of parts may be made to the device as described heretofore, without departing from the field and scope of the present invention.

For example, two or more transmission units 15 can be installed, one for every light unit 13, for example in correspondence with the two rear sides of the vehicle, so that each pair of sensors 12 is associated with a corresponding transmission unit 15.

It is also clear that, although the present invention has been described with reference to a specific example, a person of skill in the art shall certainly be able to achieve many other equivalent forms of device to assist in maneuvering and parking commercial and industrial vehicles, having the characteristics as set forth in the claims and hence all coming within the field of protection defined thereby.

## Claims

1. Device to assist in maneuvering and parking a commercial or industrial motor vehicle, comprising electronic means, installed in the rear part of said vehicle and able to detect the presence of an obstacle and to transmit a corresponding signal, **characterized in that** said electronic means comprises one or more proximity sensors (12) and at least a transmission unit (15), fed by at least an electric feed cable already present in said vehicle to feed at least a rear light unit (13) of said vehicle.

2. Device as in claim 1, **characterized in that** said proximity sensors (12) and said transmission unit (15) are installed inside at least one of said rear light units (13) of said vehicle.

3. Device as in claim 1 or 2, **characterized in that** said rear light units (13) are mounted on an anti-rear-end collision bar (11) of said vehicle.

4. Device as in any claim hereinbefore, **characterized in that** said electric feed cable of said light unit (13) is the electric feed cable (22) of the reversing light (23).

5. Device as in any claim hereinbefore, **characterized in that** said transmission unit (15) is able to transmit said signal relating to the presence of said obstacle via radio to a receiver unit (24).

6. Device as in claim 5, **characterized in that** said receiver unit (24) is able to be disposed in the driver's cabin (28) of said vehicle, to receive via radio said signal transmitted by said transmission unit (15).

7. Device as in claim 6, **characterized in that** it also comprises an acoustic and/or visual signaling device (26), able to be disposed in said driver's cabin (28) to signal to the driver of said vehicle the presence of said obstacle.

8. Device as in claim 6 or 7, **characterized in that** said receiver unit (24) and/or said signaling device (26) are able to be installed in at least one of the external rear-view mirrors of the vehicle.
